# EUROPÄISCHE PATENTANMELDUNG

(11) **EP 4 472 032 A1**
(43) Veröffentlichungstag der Anmeldung: **04.12.2024**
(21) Anmeldenummer: 23176377.2
(22) Anmeldetag: 31.05.2023
(51) Int. Cl.: H02K 1/278, H02K 15/03, H01F 1/053

(54) **ROTOR**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)
(74) Vertreter: Siemens Patent Attorneys

(57) **Zusammenfassung**

Die Erfindung betrifft einen Rotor (19) für eine dynamoelektrische rotatorische Maschine (11), aufweisend einen Tragkörper (4) und eine Mehrzahl an Magneten (2, 2b), wobei die Magnete (2, 2b) auf und/oder wenigstens teilweise innerhalb des Tragkörpers (4) angeordnet sind, wobei die Magnete (2, 2b) linsenförmig sind.

## Beschreibung

Die Erfindung betrifft einen Rotor für eine dynamoelektrische rotatorische Maschine.

Permanenterregte Synchronmaschinen weisen meist NdFeB-Magnete auf. Die Herstellung dieser Magnete ist jedoch energieintensiv. Zudem besteht bei der Fokussierung auf ein Material die Gefahr, dass dieses nicht mehr verfügbar ist oder der Preis dafür steigt. Werden andere Magnete verwendet, leidet meist eine Dynamik der Maschine.

Der Erfindung liegt die Aufgabe zugrunde, eine hochdynamische Maschine bereitzustellen unter Berücksichtigung der Magnetproblematik.

Die Lösung der Aufgabe gelingt durch Anspruch 1, d. h. einen Rotor für eine dynamoelektrische rotatorische Maschine, aufweisend einen Tragkörper und eine Mehrzahl an Magneten, wobei die Magnete auf und/oder wenigstens teilweise innerhalb des Tragkörpers angeordnet sind, wobei die Magnete linsenförmig sind.

Die Magnete sind vorteilhaft bikonvexlinsenförmig und/oder plankonvexlinsenförmig und/oder konkavkonvexlinsenförmig ausgebildet.

Die Magnete sind vorzugsweise lateral magnetisiert.

Dies gelingt vorteilhaft dadurch, dass eine Magnetisierung im Magneten von einer Seite oder Fläche erfolgt.

Bei einem linsenförmigen Magneten liegen die Pole vorzugsweise auf der Fläche, die dem Rotor zugewandt ist.

Diese Magnete, insbesondere Permanentmagnete, sind vorteilhaft lateral magnetisiert, d.h. man kann sich diesbezüglich einen Stabmagneten vorstellen, dessen Enden, also die Pole einander zugewandt, insbesondere nahezu zusammengeklappt oder sogar zusammengeklappt werden. Grundsätzlich wird ein magnetischer Pol Nord oder Süd des Rotors also vorteilhaft durch zwei aneinander liegende gleichnamige Pole Nord-Nord oder Süd-Süd des Permanentmagneten gebildet. Dies ist in EP 2991195 A1 bereits genauer beschrieben.

Ein Pol des Rotors wird vorteilhaft durch die gleichnamigen Pole von zwei aneinander liegenden Magneten gebildet.

Der Tragkörper ist vorzugsweise eisenlos.

Durch die Vermeidung von weichmagnetischen Werkstoffen im Rotor werden beispielsweise die Induktivitäten des Motors verringert. Damit kann der Strom schneller in die Motorwicklung eingeprägt werden, was wiederum die Dynamik des Motors erhöht.

Vorteilhaft ist eine Ausführungsform, wonach der Tragkörper Keramik, insbesondere technische Keramik und/oder Aluminium und/oder kohlenstofffaserverstärkten Kunststoff aufweist.

Insbesondere lateral magnetisierte Linsenmagnete erlauben ein amagnetisches Trägermaterial, wie beispielsweise technische Keramik, Aluminium oder kohlenstofffaserverstärkten Kunststoff, kurz: CFK. Dadurch ergeben sich viele Vorteile, z. B. ein geringeres Gewicht, ein geringeres Trägheitsmoment und eine höhere Steifigkeit. Das führt vorteilhaft zu einer erhöhten Motordynamik und einer geringeren Schwingungsneigung.

Vorteilhaft ist eine Ausführungsform, wonach die Magnete Cer aufweisen.

Cer (Ce) kommt als Element wesentlich häufiger vor als die bisher genutzte seltene Erde Neodym (Nd) und ist in Abbaugebieten reichlich verfügbar. Cer weist eine gute Ökobilanz auf und ist günstig.

Seltene Erden wie Neodym und besonders die schweren seltenen Erden wie z. B. Dysprosium und Terbium, die manchmal auch als Legierungselemente in den beschriebenen Dauermagneten enthalten sind, stammen meist aus Asien.

Cer ist weltweit verfügbar und trägt daher zur Diversifizierung der Lieferketten bei. Eine Versorgungssicherheit wird somit erhöht.

Die Magnete können auch eine Legierung, aufweisend Cer, Neodym, Eisen und Bor aufweisen.

Vorteilhaft ist eine Ausführungsform, wonach wenigstens 50% einer Magnetgesamtmasse Cer ist. Somit kann eine dynamische Maschine geschaffen werden, die zudem günstig ist.

Besonders vorteilhaft, insbesondere mit Blick auf Umweltaspekte, weisen Magnete aus Recyclingmaterial gewonnenes Neodym, Eisen und/oder Bor auf.

In einer weiteren vorteilhaften Ausführungsform weisen die Magnete luftspaltseitig eine Gestaltabweichung auf.

Diese Gestaltabweichung ist vorteilhaft als eine linienförmige Vertiefung mit gerundetem und/oder flachem Grund ausgebildet.
Die Gestaltabweichung ist vorteilhaft als Riefe und/oder Rille ausgebildet.

Die Gestaltabweichung ist vorteilhaft an einem Außenumfang des Rotors umlaufen ausgebildet.

Dies bietet den Vorteil, dass eine Bandage, insbesondere am Außenumfang des Rotors angeordnet, gut hält und kein Verrutschen zu befürchten ist.

Auch ein Bandagieren beim Herstellungsverfahren wird erleichtert.

Die Bandage ist vorteilhaft eine Fadenbandage, wobei ein Bandagefaden in Vertiefungen der Gestaltabweichung angeordnet ist.

Die Lösung der Aufgabe gelingt ferner durch eine dynamoelektrische Maschine, aufweisend einen derartigen Rotor.

Die Lösung der Aufgabe gelingt ferner durch ein Verfahren zur Herstellung eines Cer aufweisenden Magneten für einen derartigen Rotor, wobei der Magnet mittels Metal Injection Molding, kurz: MIM, hergestellt wird.

Das MIM-Verfahren ist ein Metallpulverspritzgussverfahren und aus dem Stand der Technik bekannt.

Vorteilhaft wird auf wenigstens einer Seite des Magneten eine Gestaltabweichung bzw. eine Struktur ausgebildet.

Vorteilhaft wird eine linienförmige Vertiefung, insbesondere Rillen und/oder Riefen, ausgebildet.

Mit Hilfe des MIM-Verfahrens kann besonders leicht eine strukturierte Oberfläche, insbesondere auf der dem Luftspalt zugewandten Seite der Magnete erzeugt werden, die insbesondere für das Badagieren mit Bandagierfäden genutzt werden kann.

Durch eine Bandage wird ein kleinerer magnetischer Luftspalt möglich, was zu höheren Drehmomenten und höherer Motordynamik führt.

Im Folgenden wird die Erfindung anhand der in den Figuren dargestellten Ausführungsbeispiele näher beschrieben und erläutert. Es zeigen:
- FIG 1: eine Einheit, aufweisend einen Trägerkörper und einer Mehrzahl an Magneten,
- FIG 2: eine dynamoelektrische rotatorische Maschine,
- FIG 3: einen Rotor,
- FIG 4: einen Magneten,
- FIG 5: mögliche Linsenformen,
- FIG 6: ein beispielhaftes Herstellungsverfahren.

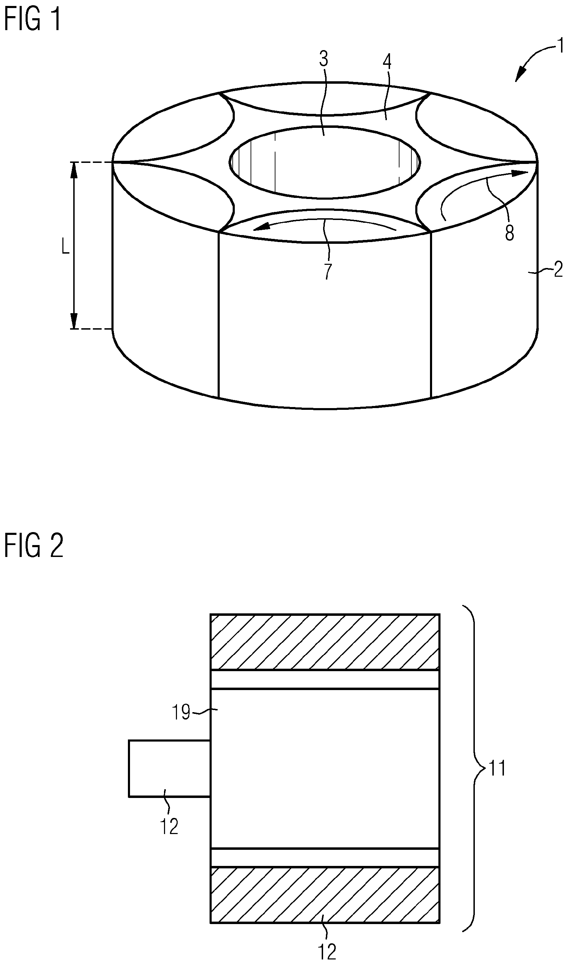

FIG 1 zeigt eine Einheit 1, aufweisend einen Trägerkörper 4, der eine Mehrzahl an Magneten 2 trägt, sowie eine Wellenaussparung 3 für einen Rotor 19, siehe FIG 2.

Die Tragkonstruktion ist vorteilhaft eisenlos.

Die Magnete 2 sind in der Figur bikonvexlinsenförmig. Es können auch andere Linsenformen eingesetzt werden.

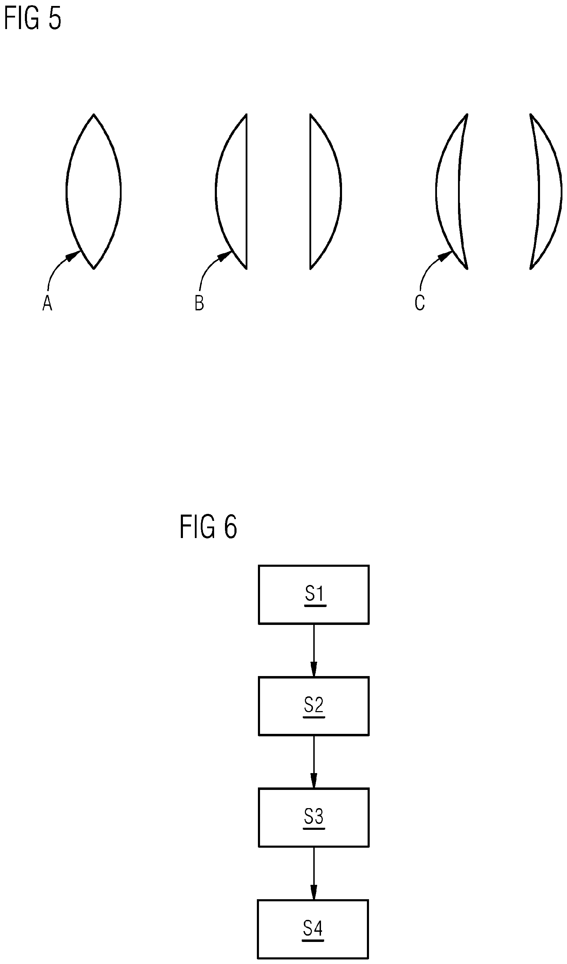

Besonders vorteilhaft sind hierbei die in FIG 5 gezeigten Linsenformen: A: bikonvexlinsenförmig, B: plankonvexlinsenförmig, C: konkavkonvexlinsenförmig. Auch andere sind möglich.

Die beiden Wölbungen des bikonvexlinsenfömigen Magneten 2 können gleichartig sein. Es ist auch möglich, dass sich die Radien der gegenüberliegenden Wölbungen unterscheiden.

Die Figur zeigt zudem eine axiale Ausdehnung der Einheit 1 bzw. eine Länge L.

Die Magnete 2 sind vorteilhaft lateral magnetisiert. Dies ist durch die Magnetisierungsrichtungen 7 und 8 gekennzeichnet.

FIG 2 zeigt eine dynamoelektrische rotatorische Maschine 11, aufweisend einen Stator 10 sowie den Rotor 19 mit einer Welle 12.

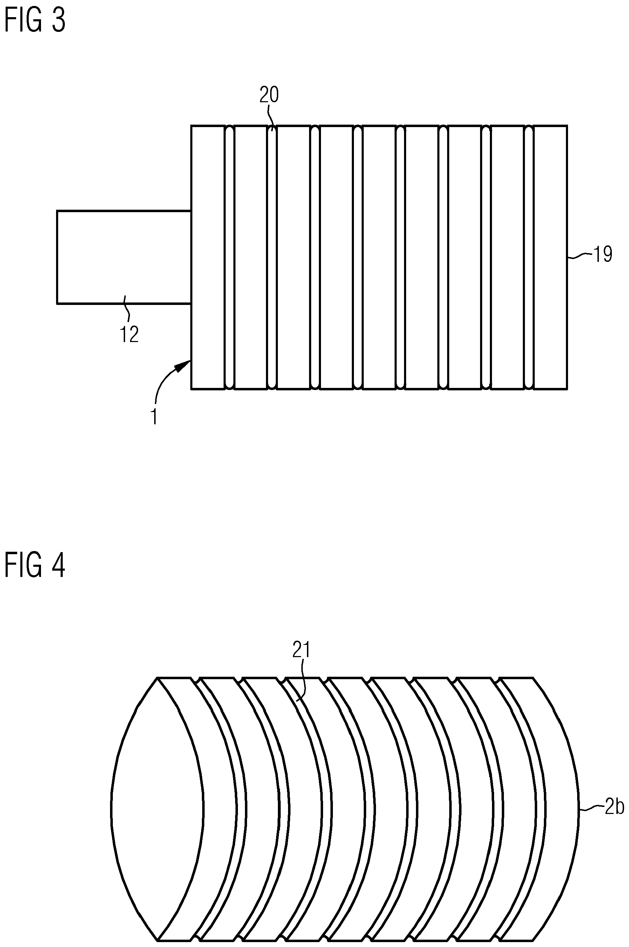

FIG 3 zeigt den Rotor 19 aufweisend eine Fadenbandage. Der Bandagefaden 20 liegt vorteilhaft in Rillen bzw. Riefen 21, die beispielsweise ein Magnet 2b, siehe FIG 4, aufweist.

Die Bandage kann jedoch auch aufgebracht werden, wenn der Magnet keine Struktur bzw. keine Gestaltabweichung aufweist.

FIG 6 zeigt ein beispielhaftes Herstellungsverfahren. Mittels Metal Injection Molding wird hierbei ein Cer aufweisender Magnet 2, 2b für einen Rotor 19 hergestellt.

In einem Verfahrensschritt S1 erfolgt eine Feedstockproduktion, also insbesondere die Herstellung eins Metallpulver-Bindemittel-Gemischs. Dieses weist vorteilhaft Cer in Pulverform auf.

Auch weitere Materialien können enthalten sein, insbesondere Neodym, Eisen und/oder Bor.

In einem Verfahrensschritt S2 erfolgt ein Spritzgießen. Vorteilhaft wird auf wenigstens einer Seite des Magneten eine Gestaltabweichung bzw. Struktur ausgebildet.

In einem Verfahrensschritt S3 erfolgt ein Entbindern.

In einem Verfahrensschritt S4 erfolgt ein Sintern des Magneten.

Das Verfahren ist von Vorteil, da nur wenig Energie benötigt wird.

Durch die Erfindung kann eine dynamische permanenterregte Synchronmaschine hergestellt werden. Besonders der vorteilhaft eisenlose Trägerkörper 4 und der reduzierte Energiebedarf bei der Magnetherstellung tragen dem Umweltaspekt Rechnung. Besonders nachhaltig ist die Herstellung, wenn Recyclingmaterial für die Feedstockproduktion verwendet wird.

## Patentansprüche

1. Rotor (19) für eine dynamoelektrische rotatorische Maschine (11), aufweisend einen Tragkörper (4) und eine Mehrzahl an Magneten (2, 2b), wobei die Magnete (2, 2b) auf und/oder wenigstens teilweise innerhalb des Tragkörpers (4) angeordnet sind, wobei die Magnete (2, 2b) linsenförmig sind.

2. Rotor (19) nach Anspruch 1, wobei die Magnete (2, 2b) bikonvexlinsenförmig und/oder plankonvexlinsenförmig und/oder konkavkonvexlinsenförmig ausgebildet sind.

3. Rotor (19) nach einem der vorhergehenden Ansprüche, wobei der Tragkörper (4) eisenlos ist.

4. Rotor (19) nach einem der vorhergehenden Ansprüche, wobei der Tragkörper (4) Keramik, insbesondere technische Keramik, und/oder Aluminium und/oder kohlenstofffaserverstärkten Kunststoff aufweist.

5. Rotor (19) nach einem der vorhergehenden Ansprüche, wobei die Magnete (2, 2b) lateral magnetisiert sind.

6. Rotor (19) nach einem der vorhergehenden Ansprüche, wobei die Magnete (2, 2b) Cer aufweisen.

7. Rotor (19) nach einem der vorhergehenden Ansprüche, wobei die Magnete (2, 2b) Cer, Neodym, Eisen und Bor aufweisen

8. Rotor (19) nach einem der vorhergehenden Ansprüche, wobei wenigstens 50% einer Magnetgesamtmasse Cer ist.

9. Rotor (19) nach einem der vorhergehenden Ansprüche, wobei die Magnete (2, 2b) aus Recyclingmaterial gewonnenes Neodym, Eisen und/oder Bor aufweisen.

10. Rotor (19) nach einem der vorhergehenden Ansprüche, wobei die Magnete (2, 2b) luftspaltseitig eine Gestaltabweichung aufweisen.

11. Rotor (19) nach Anspruch 10, wobei die Gestaltabweichung als eine linienförmige Vertiefung (21) mit gerundetem und/oder flachem Grund ausgebildet ist.

12. Rotor (19) nach einem der vorhergehenden Ansprüche 10 oder 11, wobei die Gestaltabweichung, insbesondere als Riefe und/oder Rille, an einem Außenumfang des Rotors umlaufen ausgebildet ist.

13. Rotor (19) nach einem der vorhergehenden Ansprüche, wobei der Rotor eine Bandage aufweist.

14. Rotor (19) nach einem der vorhergehenden Ansprüche 11 bis 13, wobei die Bandage eine Fadenbandage ist, wobei ein Bandagefaden (20) der Fadenbandage in Vertiefungen (21) der Gestaltabweichung angeordnet ist.

15. Dynamoelektrische Maschine (11), aufweisend einen Rotor (19) nach einem der Ansprüche 1 bis 14.

16. Verfahren zur Herstellung eines Cer aufweisenden Magneten (2, 2b) für einen Rotor (19) nach einem der Ansprüche 1 bis 14, wobei der Magnet (2, 2b) mittels Metal Injection Molding hergestellt wird.
